(19) Europäisches Patentamt
European Patent Office
Office européen des brevets

(11) **EP 3 372 961 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **17159374.2**

(22) Anmeldetag: **06.03.2017**

(51) Internationale Patentklassifikation (IPC):
*G01F 1/66* (2022.01)   *G01F 5/00* (2006.01)
*G01F 15/18* (2006.01)   *G01F 15/00* (2006.01)

(52) Gemeinsame Patentklassifikation (CPC):
**G01F 1/662; G01F 5/00; G01F 15/00; G01F 15/185**

(54) **MESSEINHEIT, LEITUNGSSTÜCK, DURCHFLUSSMESSER UND VERFAHREN ZUR BESTIMMUNG DER DURCHFLUSSMENGE**

MEASURING UNIT, CONDUIT PIECE, FLOW METER AND METHOD FOR DETERMINING THE FLOW RATE

UNITÉ DE MESURE, PARTIE DE CONDUITE, DÉBITMÈTRE ET PROCÉDÉ DE DÉTERMINATION DU DÉBIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.09.2018 Patentblatt 2018/37**

(73) Patentinhaber: **Engelmann Sensor GmbH**
**69168 Wiesloch-Baiertal (DE)**

(72) Erfinder:
• **Reiß, Holger**
**76764 Rheinzabern (DE)**
• **Sturek, Robert**
**69242 Mühlhausen (DE)**

(74) Vertreter: **Durm Patentanwälte PartG mbB**
**Patentanwälte**
**Moltkestrasse 45**
**76133 Karlsruhe (DE)**

(56) Entgegenhaltungen:
CN-A- 106 092 232   DE-A1-102004 060 063
DE-A1-102009 045 620   DE-A1-102013 012 139
JP-B2- 3 557 735   US-A- 4 428 231
US-A1- 2008 016 957   US-A1- 2016 341 584

**Beschreibung**

Die Erfindung betrifft eine Messeinheit zum Bestimmen eines Gesamtflusses eines Fluids, das durch ein Leitungsstück strömt, mit einem Einlass, einem Auslass und einem dazwischen verlaufenden Messkanal sowie mit einem ersten Ultraschallwandler zum Aussenden eines Ultraschallsignals in den Messkanal und einem zweiten Ultraschallwandler zum Empfangen des Ultraschallsignals nach Durchlaufen des Messkanals.

Derartige Messeinheiten werden beispielsweise in Durchflussmessern für Wärmezähler im Bereich der Fernwärme verwendet. Mithilfe solcher Wärmezähler ist es möglich, die Wärmemenge, die Verbrauchern über Warmwasserleitungen zugeführt wird, zu ermitteln. Hierzu wird das Volumen des warmen Wassers, das durch den Messkanal strömt, gemessen. Temperaturfühler ermitteln zusätzlich die Temperaturdifferenz zwischen zwei Messpunkten im Vorlauf und Rücklauf, also vor und nach Abgabe der im Wasser gespeicherten Wärmemenge. Basierend auf diesen beiden Messungen kann der Wärmezähler die verbrauchte Wärmemenge ermitteln. Weitere Anwendungsfelder umfassen die Wasserverbrauchsmessung in Verteilerzentren und in Wohn-, Geschäfts- oder Industriegebäuden (sog. Ultraschall-Großwasserzähler).

Ein Beispiel für eine Ultraschall-Messeinheit findet sich in DE 10 2013 012 139 A1. Offenbart wird ein Ultraschallzähler zur Erfassung der Durchflussmenge eines Fluids, mit einem vorzugsweise rohrförmigen Gehäuse, welches mit einem Fluidnetz verbindbar ist und einen Strömungskanal aufweist, sowie einer innerhalb des Strömungskanals angeordneten Ultraschallmessstrecke mit Messkanal zur Erfassung der Durchflussmenge des Fluids. Die Ultraschall-Messstrecke ist als Bypasskanal ausgebildet, der innerhalb des Strömungskanals angeordnet ist, so dass ein Strömungsanteil der Gesamtströmung abzweigbar ist und dieser Strömungsanteil als repräsentativer Anteil für die Erfassung der Gesamtdurchflussmenge dient.

In JP 3 557735 B2 wird eine Strömungsratenmessvorrichtung offenbart. Die Vorrichtung umfasst einen ersten Vibrator und einen zweiten Vibrator, die an einem Bypassströmungskanal installiert sind, der schlanker ist als ein Hauptströmungskanal. Weiterhin umfasst die Vorrichtung eine Messschaltung, die die Laufzeit eines Signals zwischen den Vibratoren misst und eine Durchflussratenberechnungseinrichtung, die eine Durchflussrate auf Basis des Signals der Messschaltung berechnet.

In DE 10 2009 045620 A1 wird ein Ultraschallströmungssensor zur Erfassung einer Strömung eines fluiden Mediums in einem Strömungsrohr vorgeschlagen. Der Ultraschallströmungssensor umfasst mindestens einen ersten Ultraschallwandler und mindestens einen zweiten Ultraschallwandler sowie mindestens einen Hohlleiter. Der Hohlleiter ist ausgestaltet, um Ultraschallwellen zwischen dem mindestens einen ersten Ultraschallwandler und dem mindestens einen zweiten Ultraschallwandler durch Reflexion an Wänden des Hohlleiters zu leiten. Der Hohlleiter ist weiterhin ausgestaltet, um von dem fluiden Medium durchströmt zu werden. Der Ultraschallströmungssensor ist derart eingerichtet, dass sich die Ultraschallwellen zwischen dem ersten Ultraschallwandler und dem zweiten Ultraschallwandler auf mindestens zwei Ultraschallwegen ausbreiten können. Die Ultraschallwellen werden auf den unterschiedlichen Ultraschallwegen (124) unterschiedlich oft reflektiert. Schallenergien der auf den mindestens zwei verschiedenen Ultraschallwegen übertragenen Ultraschallwellen unterscheiden sich um nicht mehr als einen Faktor 100.

In US 2016/0341584 A1 wird ein Gasdurchflussmesser offenbart. Der Gasdurchflussmesser umfasst einen Gerätekörper, der ein Messzielfluid luftdicht einkapselt. Der Gasdurchflussmesser umfasst weiterhin einen Einlass, der konfiguriert ist, um das Messzielfluid in den Gerätekörper einzuführen, einen Auslass, der konfiguriert ist, um das Messzielfluid aus dem Gerätekörper abzulassen, und einen Anschluss, der mit der Steckdose verbunden ist. Der Gasdurchflussmesser umfasst ferner ein Durchflussmessteil vom Ultraschalltyp, das mit dem Anschluss verbunden ist, und einen Durchfluss des darin strömenden Messzielfluids berechnet, und ein Strömungswegelement, das mit dem Anschlussstück verbunden ist, und eine Strömungswegform identisch mit dem des Durchflussmessteils aufweist. Das Durchflussmessteil und das Strömungswegelement sind mit dem Anschluss in einer vertikalen Richtung derart verbunden, dass eine Seite der Einströmöffnungen, durch die das Messzielfluid einströmt, nach unten weist.

Die DE 10 2013 012 139 A1 betrifft einen Ultraschallzähler zur Erfassung der Durchflussmenge eines Fluids mit einem vorzugsweise rohrförmigen Gehäuse, welches mit einem Fluidnetz verbindbar ist und einen Strömungskanal aufweist sowie einer innerhalb des Strömungskanals angeordneten Ultraschallmessstrecke mit Messkanal zur Erfassung der Durchflussmenge des Fluids. Zur Lösung der Aufgabe, eine vergleichsweise preiswerte aber hinsichtlich der Messgenauigkeit effiziente Ausgestaltung eines Ultraschallzählers zur Verfügung zu stellen, wird erfindungsgemäß vorgeschlagen, dass die Ultraschall-Messstrecke als Bypasskanal ausgebildet ist, der innerhalb des Strömungskanals angeordnet ist, sodass ein Strömungsanteil der Gesamtströmung abzweigbar ist und dieser Strömungsanteil als repräsentativer Anteil für die Erfassung der Gesamtdurchflussmenge dient. Zweckmäßigerweise sind im Bereich des Bypasskanals Mittel zur Erzeugung des Druckabfalls vorgesehen.

In US 4,428,231 wird ein Heißfilm-Luftmassendurchflussmesser mit niedrigem Druckabfall für einen Kraftfahrzeugmotor offenbart. Der Durchflussmesser umfasst einen Hauptluftströmungskanal, eine Strömungsdüse mit feststehender Kontur, die in dem Hauptluftströmungskanal angeordnet ist, und einen geschlossenen kreisförmigen Rezirkulationsweg.

In US 2008/0016957 A1 wird ein Massendurchflussmesser offenbart. Der Massendurchflussmesser hat einen Durchflussmessbereich, der durch Ändern der Struktur eines Sensorabschnitts ohne Modifikation eines Umgehungsabschnitts erweitert werden kann. Der Massendurchflussmesser umfasst ein Sensorrohr, durch das Fluid geleitet wird, während es erwärmt wird, wobei der Durchflussmesser angepasst ist, um einen Massendurchfluss des Fluids basierend auf einer Änderung der Temperaturverteilung in dem Sensorrohr zu erfassen.

CN 106 092 232 A betrifft einen auf akustischen Wellen basierenden Flussmesser.

Um die Genauigkeit der Messung sicherzustellen und auch nachweisen zu können, ist es hilfreich und oftmals auch vorgeschrieben, dass die Messeinheit vor und während der Verwendung regelmäßig überprüft bzw. geeicht wird. Hierzu wird die gesamte Funktionsgruppe in einem entsprechend ausgestatteten Teststand untersucht. Insbesondere bei größeren Rohrdurchmessern, wie beispielsweise in Verteilerstellen oder in großen Wohn- oder Industrieanlagen, ist dieser Eichvorgang daher relativ aufwändig. Dies gilt ebenfalls für eine vor der ersten Verwendung einmalig durchzuführende Kalibrierung.

Angesichts dieser Problematik ist es Aufgabe der vorliegenden Erfindung, grö-ßere und große Durchflussmengen genau zu messen, dabei aber den Aufwand für die Eichung, Überprüfung und Kalibrierung gering zu halten.

Gemäß einem ersten Aspekt der vorliegenden Erfindung wird diese Aufgabe bei einer Messeinheit nach dem Oberbegriff des Anspruchs 1 dadurch gelöst, dass der Einlass und der Auslass zum lösbaren Anschließen an das Leitungsstück derart ausgebildet sind, dass der Gesamtfluss aufgeteilt wird in einen Hauptfluss im Leitungsstück und einen Nebenfluss, der durch den Messkanal geleitet wird und anschließend wieder mit dem Hauptfluss vereinigt wird. Zudem ist die Messeinheit zum Ankoppeln an das Leitungsstück von außen an eine Außenwand des Leitungsstücks ausgebildet. Weiterhin umfassen der Einlass und der Auslass jeweils senkrecht zum Messkanal verlaufende Anschlussabschnitte, die in Aufnahmen am Leitungsstück eingreifen können.

Ein weiterer Aspekt der Erfindung betrifft ein Leitungsstück zum Bestimmen eines Gesamtflusses eines Fluids, mit am Anfang und am Ende angeordneten Verbindungen zum Anschluss an anschließende Fluidleitungen; einer ersten Anschlussöffnung und einer mit Abstand stromabwärts angeordneten zweiten Anschlussöffnung zum lösbaren Anschließen einer Messeinheit wie oben beschrieben; und mit einem Strömungswiderstand zum Erzeugen eines Druckabfalls zwischen der ersten Anschlussöffnung und der zweiten Anschlussöffnung. Die Aufgabe wird erfindungsgemäß dadurch gelöst, dass die erste Anschlussöffnung zum Verbinden mit dem Einlass der Messeinheit und die zweite Anschlussöffnung zum Verbinden mit dem Auslass der vorstehend beschriebenen Messeinheit ausgebildet sind.

Ein dritter Aspekt der Erfindung betrifft einen Durchflussmesser. Dabei wird die genannte Aufgabe durch eine Messeinheit und ein Leitungsstück, wie zuvor beschrieben, gelöst.

Schließlich betrifft die Erfindung ein Verfahren zum Bestimmen eines Gesamtflusses eines Fluids, das durch ein Leitungsstück strömt. Die genannte Aufgabe wird gelöst durch die Schritte: Anschließen einer Messeinheit, wie zuvor beschrieben, an ein Leitungsstück, wie zuvor beschrieben, sodass der Gesamtfluss aufgeteilt wird in einen Hauptfluss im Leitungsstück und einen Nebenfluss, der durch den Messkanal geleitet wird und anschließend wieder mit dem Hauptfluss vereinigt wird; Senden eines Ultraschallsignals in den Messkanal und Empfangen des ausgesandten Ultraschallsignals nach Durchlaufen des Messkanals; Ermitteln des Nebenflusses basierend auf dem empfangenen Ultraschallsignal; und Berechnen des Gesamtflusses durch eine Multiplikation des Nebenflusses mit einem Proportionalitätsfaktor, der ein Verhältnis des Nebenflusses zum Hauptfluss angibt.

Bevorzugte Ausgestaltungen der Erfindung werden in den abhängigen Ansprüchen beschrieben. Es versteht sich, dass die Messeinheit, das Leitungsstück, der Durchflussmesser und das Verfahren entsprechend der für die Messeinheit, das Leitungsstück, den Durchflussmesser und das Verfahren in den abhängigen Ansprüchen beschriebenen Ausgestaltungen ausgeführt sein können.

Unter Bestimmen bzw. Messen eines (Fluid-) Flusses ist hier insbesondere die Bestimmung einer Durchflussmenge, bzw. die Ermittlung eines Volumenstroms zu verstehen. Das Fluid kann insbesondere Wasser sein, es kann jedoch auch eine andere Flüssigkeit wie Öl oder im Prinzip auch ein Gas sein.

Erfindungsgemäß wird die Messung nicht innerhalb, sondern außerhalb des Leitungsstücks ausgeführt. Hierzu sind der Einlass und der Auslass der Messeinheit zum lösbaren Anschließen an das Leitungsstück ausgebildet. Die Messeinheit kann insbesondere von außen an eine Außenwand des Leitungsstücks angekoppelt werden. Anschließen versteht sich dabei als lösbares Befestigen von außen, insbesondere Anschrauben, Ankoppeln, Anstecken oder Herstellen einer magnetischen Verbindung. Im angeschlossenen Zustand befindet sich die Messeinheit vollständig außerhalb des Leitungsstücks und ist leicht lösbar bzw. demontier- oder abkoppelbar.

Durch den Auslass und den Einlass der Messeinheit wird aus dem Gesamtfluss ein Nebenfluss abgezweigt, der in dem Messkanal mittels zweier Ultraschallwandler bestimmt wird. Die Messeinheit bildet dabei eine Art Bypasskanal zum Leitungsstück.

Das Leitungsstück verfügt erfindungsgemäß über zwei Anschlussöffnungen, die mit dem Einlass und dem Auslass korrespondieren. Zwischen den beiden Anschlussöffnungen des Leitungsstücks ist ein Strömungswiderstand angeordnet, durch das eine Druckdifferenz bzw. ein Rückstau zwischen den beiden Anschlussöffnungen erzeugt wird. Aufgrund dieses Rückstaus gelangt Fluid durch die erste Anschlussöffnung bzw. durch den Einlass in die Messeinheit, durchläuft den Messkanal und wird dann durch den Auslass bzw. die zweite Anschlussöffnung wieder zurück in das Leitungsstück geführt.

Das erfindungsgemäße Leitungsstück ersetzt ein bisheriges Leitungsstück in einem Leitungssystem und umfasst eine Verbindung zum Verbinden mit anschließenden bzw. benachbarten Leitungsstücken. Diese Verbindung ist bevorzugt als Flanschverbindung ausgebildet, durch die eine direkte Ankopplung an benachbarte Leitungsstücke bzw. eine Integration in ein Leitungsnetzwerk erfolgen kann. Der Installationsaufwand ist minimal.

Messeinheit und Leitungsstück bilden zusammen den Durchflussmesser. Durch die erfindungsgemäße Anordnung der Messeinheit wird erreicht, dass der Nebenfluss proportional zum Hauptfluss ist. Daher kann von der Bestimmung des Nebenflusses auf den Hautfluss bzw. den Gesamtfluss geschlossen werden. In anderen Worten: die Messung erfolgt unabhängig vom Leitungsstück.

Für einen vorgegebenen Rohrdurchmesser des Leitungsstücks ist die Proportionalität unabhängig vom Gesamtfluss, sodass eine einmalige Ermittlung eines entsprechenden Proportionalitätsfaktors ausreichend ist. Daher kann die Messeinheit separat geeicht werden. Die Eichung des ganzen Durchflussmessers erfolgt durch die Eichung der Messeinheit.

In bisherigen ultraschallbasierten Durchflussmessern ist es erforderlich, dass auch bei Anlagen mit großen Durchmessern das Leitungsstück mitsamt innenliegender Messeinheit für die Eichung ausgebaut wird. Dies wird durch die Erfindung vermieden, da die Messeinheit in der erfindungsgemäßen Weise an das Leitungsstück anschließbar bzw. lösbar ausgebildet ist. Das Verhältnis zwischen Hauptfluss im Leitungsstück und Nebenfluss in der Messeinheit ist konstant, sodass für die Eichung lediglich die Messeinheit und nicht der gesamte Durchflussmesser hergenommen werden muss. Lediglich die außenliegende Messeinheit wird abgekoppelt und geeicht, das Leitungsstück kann im Leitungssystem verbleiben.

Die vorliegende Erfindung ist demnach besonders vorteilhaft bei großen Rohrdurchmessern und Gesamtflüssen, bei denen die Eichung bisher sehr aufwändig war. Zudem kann im Falle eines Defekts oder einer erforderlichen Wartung ein einfacher und schneller Austausch der Messeinheit vorgenommen werden. Der Zeitaufwand für die Wartung wird wesentlich verringert.

In einer bevorzugten Ausgestaltung der Messeinheit umfasst der Einlass einen ersten Anschlussabschnitt, der senkrecht zum Messkanal verläuft; und umfasst der Auslass einen zweiten Anschlussabschnitt, der senkrecht zum Messkanal verläuft. Einlass- und Auslassabschnitt sind als orthogonal zum Messkanal verlaufende Stutzen ausgebildet, die mit den Anschlussöffnungen am Leitungsstück korrespondieren und durch die Fluid in den Messkanal bzw. von dem Messkanal zurück in das Leitungsstück fließt. Im Falle eines runden Leitungsstücks sind die Anschlussabschnitte radial ausgerichtet.

In einer weiteren vorteilhaften Ausgestaltung liegen die Ultraschallwandler einander gegenüber und ist der Messkanal zwischen den Ultraschallwandlern angeordnet, sodass das Ultraschallsignal den Messkanal parallel zur Strömungsrichtung des Fluids durchläuft. Eine solche Anordnung der Ultraschallwandler wäre aufgrund des ein- und ausströmenden Fluids bei innerhalb des Leitungsstücks angeordneter Messeinheit nicht möglich. Erfindungsgemäß ist es nicht erforderlich, dass das Ultraschallsignal beim Durchlaufen des Messkanals einmal oder mehrmals umgelenkt wird. Hierdurch ergibt sich eine verbesserte Genauigkeit bzw. eine höhere Dynamik.

In einer weiteren vorteilhaften Ausgestaltung hat der Messkanal einen konstanten Querschnitt. Durch einen konstanten Querschnitt wird erreicht, dass die Strömung im Innern des Kanals gleichmäßig ist. Eine gleichmäßige Strömung, die entlang ihrer Fließrichtung von dem Ultraschallsignal durchlaufen wird, erlaubt eine besonders präzise Durchflussbestimmung. Bevorzugt ist der Messkanal im Querschnitt rund, wodurch Randeffekte minimiert werden. Die Genauigkeit der Messung bzw. die Dynamik werden erhöht.

In einer weiter bevorzugten Ausgestaltung der Messeinheit umfasst der Einlass an der Verbindung zum Messkanal einen ersten Konditionierungsabschnitt mit einer Querschnittsverengung in Strömungsrichtung des Fluids; und/oder umfasst der Auslass an der Verbindung zum Messkanal zur Strömungskonditionierung einen zweiten Konditionierungsabschnitt mit einer Querschnittserweiterung in Strömungsrichtung des Fluids. Eine solche Querschnittsverengung am Eingang des Messkanals und/oder eine Querschnittserweiterung am Ausgang des Messkanals bewirkt eine gleichmäßigere Strömung im Messkanal. Die Strömung wird konditioniert. Eine solche gleichmäßige Strömung mit nahezu konstantem Profil bewirkt eine erhöhte Genauigkeit der Ultraschall-Durchflussmessung. Die Konditionierungsabschnitte sind dabei vorzugsweise trichterförmig ausgebildet.

Bevorzugt verläuft der Messkanal parallel zum Leitungsstück, wenn die Messeinheit an das Leitungsstück angekoppelt ist. Eine Anordnung des Messkanals parallel zum Leitungsstück bewirkt, dass eine gleichbleibende Strömung mit nahezu konstantem Strömungsprofil erzeugt werden kann, wodurch die Messgenauigkeit weiter verbessert wird.

Vorteilhaft besteht die Innenwand des Messkanals aus Kunststoff. Der Kunststoff bewirkt, dass der Ultraschall in dem Messkanal weniger reflektiert wird, wodurch die Messgenauigkeit erhöht wird. Im Vergleich zu einer Ausführung aus Metall, wie im Stand der Technik verschiedentlich vorgeschlagen, insbesondere, wenn andere Messprinzipien verwendet werden, ergibt sich eine verbesserte Genauigkeit und höhere Dynamik.

In einer bevorzugten Ausgestaltung des Leitungsstücks ist der Strömungswiderstand als Düse ausgebildet, die einen ersten Düsenabschnitt mit einer Querschnittsverengung in Strömungsrichtung des Hauptflusses und einen anschließenden zweiten Düsenabschnitt mit kleinerem konstantem Querschnitt aufweist. Durch die Düse wird eine Druckdifferenz zwischen der ersten Anschlussöffnung, die mit dem Einlass der Messeinheit zusammenwirkt, und der zweiten Anschlussöffnung, die mit dem Auslass zusammenwirkt, erzeugt. Aufgrund der Druckdifferenz fließt ein ausreichend großer konstanter Fluidstrom durch die Messeinheit. Die Düse kann insbesondere eine Venturi-Düse sein.

Bevorzugt umfasst das Leitungsstück eine Einlasskammer, die in Strömungsrichtung des Hauptflusses vor der Düse angeordnet ist und an der die erste Anschlussöffnung angeordnet ist; und eine Auslasskammer, die in Strömungsrichtung des Hauptflusses hinter der Düse angeordnet ist und an der die zweite Anschlussöffnung angeordnet ist. Zwischen den Kammern entsteht durch die Düse eine Druckdifferenz.

Vorteilhafterweise mündet der zweite Düsenabschnitt in die Auslasskammer und umfasst die Auslasskammer einen Abschnitt, der den zweiten Düsenabschnitt koaxial umgibt, wobei die zweite Anschlussöffnung im Bereich des zweiten Düsenabschnitts angeordnet ist. Durch diese Anordnung wird eine möglichst geringe Beeinträchtigung der Strömung erreicht.

Weiter bevorzugt umfasst die Anschlusskammer im Bereich der zweiten Anschlussöffnung eine stetig gekrümmte radiale Wandung. Durch diese Wandung wird der aus der Messeinheit in das Leitungsstück zurückströmende Nebenfluss umgelenkt. Eine Totwasserzone wird vermieden; die Strömung wird konditioniert. Hierdurch wird sowohl der Strömungswiderstand minimiert als auch die Strömung in der Messeinheit bzw. im Messkanal möglichst gleichbleibend gehalten, sodass eine hohe Messgenauigkeit erreicht werden kann.

In einer vorteilhaften Ausgestaltung des Durchflussmessers umfasst dieser einen Prozessor, der dazu ausgebildet ist, basierend auf dem empfangenen Ultraschallsignal den Nebenfluss zu ermitteln; und durch eine Multiplikation des Nebenflusses mit einem Proportionalitätsfaktor den Gesamtfluss zu berechnen, wobei der Proportionalitätsfaktor ein Verhältnis des Nebenflusses zum Hauptfluss angibt. Die Konstanz der Proportionalität zwischen Hauptfluss und Nebenfluss über den gesamten Dynamikbereich wird genutzt, um ausgehend von der Messung des Nebenflusses auf den Gesamtfluss zu schließen.

In einer vorteilhaften Ausgestaltung umfasst das erfindungsgemäße Verfahrens einen Schritt des Eichens der Messeinheit, umfassend: Trennen der Messeinheit von dem Leitungsstück; Eichen der Messeinheit allein; und Anschließen der geeichten Messeinheit an das Leitungsstück. Wie zuvor beschrieben, wird die Messeinheit alleine und ohne Leitungsstück geeicht. Ein Ausbau und die wiederkehrende Eichung nur der Messeinheit ist aufgrund der konstanten Proportionalität zwischen Hauptfluss und Nebenfluss sehr viel einfacher durchzuführen als eine Eichung des gesamten, sehr viel größeren, Durchflussmessers. Die laufenden Kosten werden minimiert.

Ausführungsbeispiele der Erfindung werden nachstehend anhand der beigefügten Zeichnungen beschrieben und näher erläutert. Es zeigen:

Figur 1    einen Durchflussmesser in einem vereinfachten Schnittbild;

Figur 2    ein Ersatzschaltbild des Durchflussmessers von Figur 1;

Figur 3    den Verlauf des Strömungswiderstands in der Messeinheit in Abhängigkeit vom Gesamtfluss;

Figur 4    den Verlauf des Strömungswiderstands im Leitungsstück in Abhängigkeit vom Gesamtfluss;

Figur 5    den Verlauf des Proportionalitätsfaktors zwischen Nebenfluss und Gesamtfluss;

Figur 6    die Messeinheit des Durchflussmessers der Figur 1 in einer Schnittansicht;

Figur 7    das Leitungsstück des Durchflussmessers der Figur 1 in einer Schnittansicht; und

Figur 8    ein alternatives Leistungsstück.

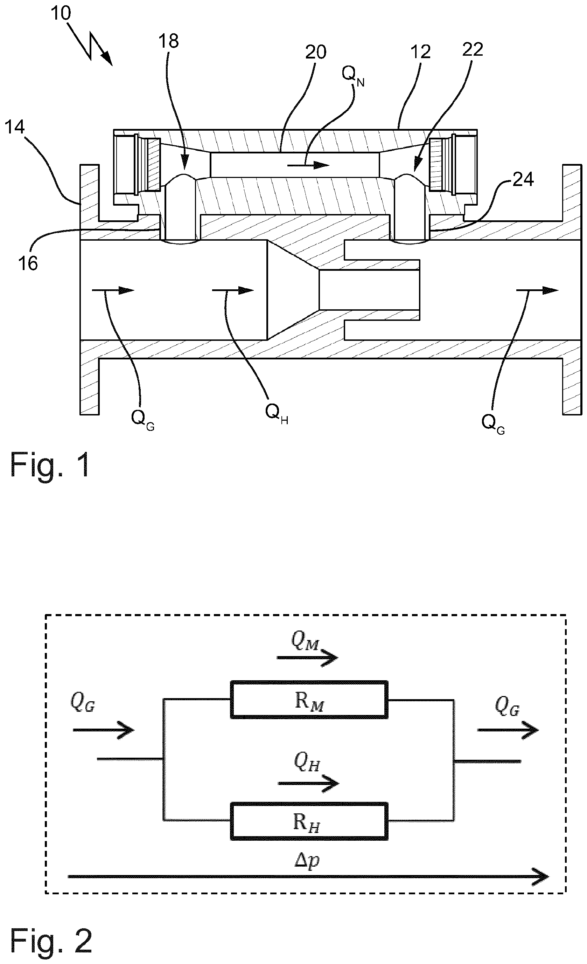

Gemäß Figur 1 umfasst der Durchflussmesser 10 eine Messeinheit 12, die an ein Leitungsstück 14 angeschlossen bzw. angekoppelt werden kann. Im angekoppelten Zustand wird ein zu messender Gesamtfluss $Q_G$ (Volumenstrom im Durchflussmesser bzw. Gesamtvolumenstrom) in einen Hauptfluss $Q_H$ (Volumenstrom im Leitungsstück bzw. Hauptvolumenstrom) durch das Leitungsstück 14 und einen Nebenfluss $Q_N$ (Volumenstrom in der Messeinheit 12 bzw. Nebenvolumenstrom) aufgeteilt.

Der Nebenfluss $Q_N$ fließt aus dem Leitungsstück 14 durch eine erste Anschlussöffnung 16 des Leitungsstücks 14 in einen Einlass 18 der Messeinheit 12, durchquert den Messkanal 20 der Messeinheit 12 und gelangt durch einen Auslass 22 bzw. eine zweite Anschlussöffnung 24 zurück in das Leitungsstück 14. Stromabwärts der zweiten Anschlussöffnung 24 vereinigen sich Nebenfluss $Q_N$ und Hauptfluss $Q_H$ wieder zum Gesamtfluss $Q_G$.

Einlass 18 und Auslass 22 können von außen an das Leitungsstück 14 angeschlossen werden.

In Figur 2 ist schematisch ein Ersatzschaltbild der Strömungen im Durchflussmesser dargestellt. Ausgehend von einer gesamten Druckdifferenz $\Delta p$ wird der Gesamtfluss $Q_G$ in einen Hauptfluss $Q_H$ und einen Nebenfluss $Q_N$ aufgeteilt. Der Hauptfluss ist dem Strömungswiderstand $R_H$ im Leitungsstück ausgesetzt, der Nebenfluss $Q_N$ ist dem Strömungswiderstand $R_N$ in der Messeinheit ausgesetzt. Nachdem der Nebenfluss $Q_N$ die Messeinheit durchlaufen hat, vereinigen sich Nebenfluss $Q_N$ und Hauptfluss $Q_H$ wieder zum Gesamtfluss $Q_G$.

Der Strömungswiderstand $R_i$ ist das Verhältnis zwischen Druckdifferenz und Durchfluss (Volumenstrom):

$$R_i = \frac{\Delta p}{Q_i^2}$$

Weiterhin ergibt sich der Gesamtfluss $Q_G$ als Summe aus Nebenfluss $Q_N$ und Hauptfluss $Q_H$:

$$Q_G = Q_N + Q_H$$

Ausgehend von einer Berechnung des Strömungswiderstands $R_I$ basierend auf dem Druckverlustbeiwert $\zeta$, der Rohrreibungszahl $\lambda$, der Dichte des Fluids $\varrho$, sowie der Länge l und des Durchmessers d des Leitungsstücks und seiner Querschnittsfläche A zu

$$R_i = \zeta_i \cdot \frac{\varrho}{2} \cdot \frac{1}{A_i^2} + \lambda_i \cdot \frac{\varrho}{2} \cdot \frac{l_i}{d_i} \cdot \frac{1}{A_i^2} \quad ,$$

ergibt sich ein im Wesentlichen konstantes Verhältnis zwischen Hauptfluss $Q_H$ und Nebenfluss $Q_N$ unabhängig vom Gesamtfluss $Q_G$.

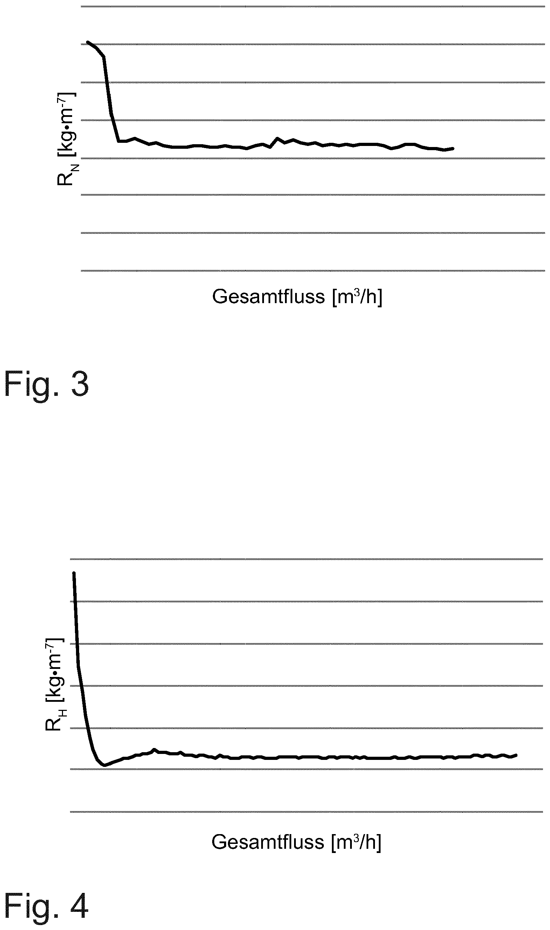

In Figur 3 ist ein beispielhafter Verlauf des Strömungswiderstands in der Messeinheit $R_N$ in Abhängigkeit vom Gesamtfluss $Q_G$ dargestellt. Sobald eine Mindestflussstärke erreicht ist, ist der Strömungswiderstand $R_N$ im Wesentlichen konstant und unabhängig vom Gesamtfluss $Q_G$.

In Figur 4 ist ein beispielhafter Verlauf der Abhängigkeit des Strömungswiderstands im Leitungsstück $R_H$ vom Gesamtfluss $Q_G$ dargestellt. Auch hier ist der Strömungswiderstand $R_H$ ab Erreichen einer Mindestflussstärke im Prinzip gleichbleibend und unabhängig vom Gesamtfluss $Q_G$.

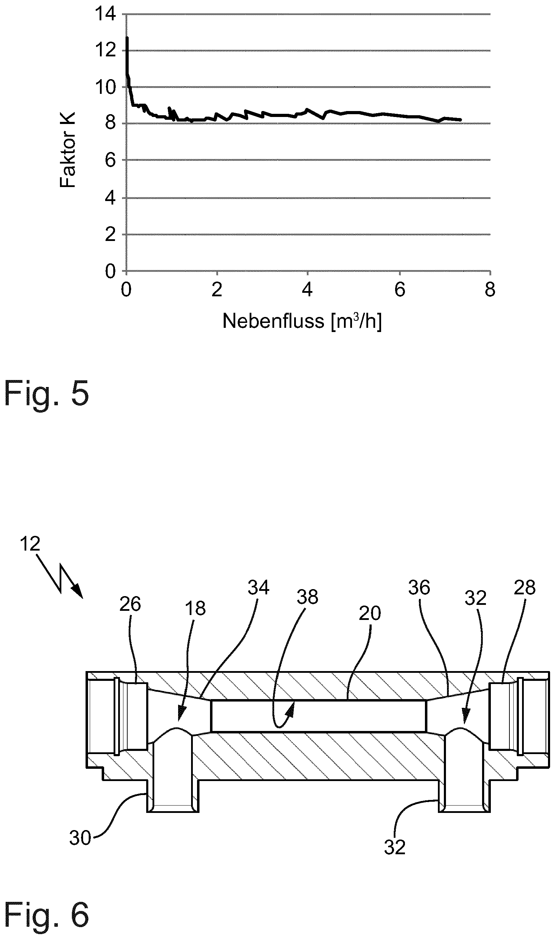

In Figur 5 ist der Verlauf des Proportionalitätsfaktors K, der das Verhältnis zwischen Gesamtfluss $Q_G$ und Nebenfluss $Q_N$ angibt, in Abhängigkeit des Nebenflusses $Q_N$ dargestellt. Der Proportionalitätsfaktor K bleibt im Wesentlichen konstant.

Folglich sind Nebenfluss $Q_N$ und Hauptfluss $Q_H$ unabhängig vom Gesamtfluss $Q_G$ im Wesentlichen direkt proportional zueinander. Diese Proportionalität wird bei dem erfindungsgemäßen Durchflussmesser ausgenutzt. Die eigentliche Messung erfolgt in der Messeinheit, wobei nur der Nebenfluss bestimmt wird. Aufgrund der Proportionalität zwischen Nebenfluss und Hauptfluss kann auf den Hauptfluss bzw. auf den Gesamtfluss zurückgeschlossen werden und zwar mit sehr hoher Genauigkeit und Sicherheit.

In Figur 6 ist die Messeinheit 12 vergrößert und allein dargestellt. Das Fluid strömt durch einen ersten Anschlussabschnitt 30 des Einlasses 18 in die Messeinheit 12, durchläuft dort den Messkanal 20 und verlässt die Messeinheit 12 wieder durch einen zweiten Anschlussabschnitt 32 des Auslasses 22.

Einlass 18 und Auslass 22 der Messeinheit 12 sind dazu ausgebildet, lösbar an das Leitungsstück angeschlossen zu werden. Unter lösbarem Anschließen versteht sich das Herstellen eine Verbindung, die auch wieder getrennt werden kann. Die Anschlussabschnitte 30, 32 verlaufen orthogonal zum Leitungsstück und können in entsprechende Aufnahmen am Leitungsstück eingreifen, wodurch der lösbare Anschluss bzw. die Verbindung zwischen den Anschlussöffnungen des Leitungsstücks und der Einlass 18 und Auslass 22 der Messeinheit 12 ermöglicht wird. Die Anschlussabschnitte 30, 32 sind also eine Art Stutzen. Die Befestigung erfolgt beispielsweise über entsprechende Befestigungsmittel, wie Schrauben, Magnete, Klebstoff etc., oder auch über einen Klemmmechanismus.

Im Gegensatz zu bisherigen Messeinheiten, die vom Gesamtfluss durchströmt werden, kann demnach die Messeinheit 12 vom Leitungsstück 14 gelöst, also abgekoppelt bzw. abgenommen, werden. Da sich die Strömungsverhältnisse innerhalb des Leitungsstücks 14 nicht ändern, ist eine Eichung des Leitungsstücks 14 nicht erforderlich. Lediglich die Messeinheit 12 muss geeicht werden. Der Eichvorgang wird folglich deutlich vereinfacht, da der in bisherigen Systemen erforderliche Ausbau des Leitungsstücks 14 für die Eichung nicht mehr notwendig ist. Das Leitungsstück 14 verbleibt vielmehr innerhalb des Leitungssystems. Nur die viel kleinere Messeinheit 12 wird gelöst, um in einer Eichvorrichtung geeicht zu werden.

In der Messeinheit 12 sind zwei Ultraschallwandler 26, 28 (Transducer) im Bereich des Einlasses 18 bzw. des Auslasses 22 angeordnet. Durch die Ultraschallwandler 26, 28 wird auf der einen Seite ein Ultraschallsignal in den Messkanal 20 eingekoppelt, das dann auf der anderen Seite empfangen wird. Beide Ultraschallwandler 26, 28 können dabei sowohl Sender als auch Empfänger sein.

Der Ultraschall durchdringt den Nebenfluss, bevor er vom zweiten Ultraschallwandler 28 wieder empfangen wird. Je nach Fließgeschwindigkeit des Wassers ändert sich die Laufzeit bzw. die Frequenz des empfangenen Ultraschallsignals.

Das Ultraschallsignal kann den Messkanal 20 grundsätzlich in beliebiger Richtung durchlaufen, wobei zumindest eine Teilstrecke bzw. ein Signalanteil auch in Flussrichtung oder gegen die Flussrichtung sein muss, um eine Messung der Fließgeschwindigkeit zu ermöglichen.

In der dargestellten Ausführungsform durchläuft der Ultraschall den Messkanal 20 parallel zum Nebenfluss $Q_N$. Der Messkanal 20 wird der Länge nach durchlaufen. Dabei ist es möglich, dass das Ultraschallsignal der Messkanal 20 entgegen der Flussrichtung oder in Flussrichtung des Fluids durchläuft.

Dadurch, dass es aufgrund der erfindungsgemäßen Anordnung der Messeinheit 12 außerhalb des Leitungsstücks 14 ermöglicht wird, dass der Messkanal 20 parallel zur Fließrichtung des Fluids durchlaufen wird, ist keine Umlenkung des Ultraschallsignals an innerhalb des Messrohrs befindlichen Spiegeln notwendig. Als Folge hiervon werden eine erhöhte Messgenauigkeit bzw. eine erhöhte Dynamik erreicht.

Wie in Figur 6 zu sehen, ist im Einlass 18 ein erster Konditionierungsabschnitt 34 mit einer Querschnittsverengung vorgesehen, in dem zur Strömungskonditionierung der Nebenfluss $Q_N$ in Richtung des Messkanals 20 verengt wird. Hierdurch wird ein einheitliches Strömungsprofil innerhalb des Messkanals 20 erreicht. Unter einem einheitlichen Strömungsprofil versteht sich ein über den gesamten Durchmesser des Messkanals 20 gleichmäßiges Profil.

Ein solches Profil erlaubt es, mittels des Ultraschallmessverfahrens eine präzise Aussage über die Durchflussmenge zu treffen. Spiegelbildlich zur Querschnittsverengung im ersten Konditionierungsabschnitt 34 im Einlass 18 ist im Auslass 22 ein zweiter Konditionierungsabschnitt 36 mit einer Querschnittserweiterung vorgesehen. In diesem zweiten Konditionierungsabschnitt 36 wird das aus dem Messkanal 20 ausfließende Fluid derart abgefangen, dass sich kein Rückstau bildet, wodurch die Strömung in dem Messkanal 20 ebenfalls konditioniert wird, um ein möglichst einheitliches Strömungsprofil über den gesamten Messkanal 20 sicherzustellen.

Die Auswertung des empfangenen Ultraschallsignals sowie die Ansteuerung der Ultraschallwandler 26, 28 erfolgt in einem Prozessor (nicht dargestellt). Aus dem empfangenen Signal wird die Durchflussmenge bestimmt. Insbesondere kann aufgrund des vordefinierten Proportionalitätsfaktors aus dem gemessenen Nebenfluss auf den Hauptfluss hochgerechnet werden und daraus der Gesamtfluss berechnet werden.

Im Bereich des Messkanals 20 ist die Messeinheit 12 bevorzugt aus Kunststoff ausgebildet bzw. weist zumindest eine Innenwand 38 aus Kunststoff auf. Kunststoff reflektiert Ultraschall schlecht, so dass Reflexionen an den Wänden des Messkanals 20, die das Messergebnis verfälschen könnten, vermieden werden.

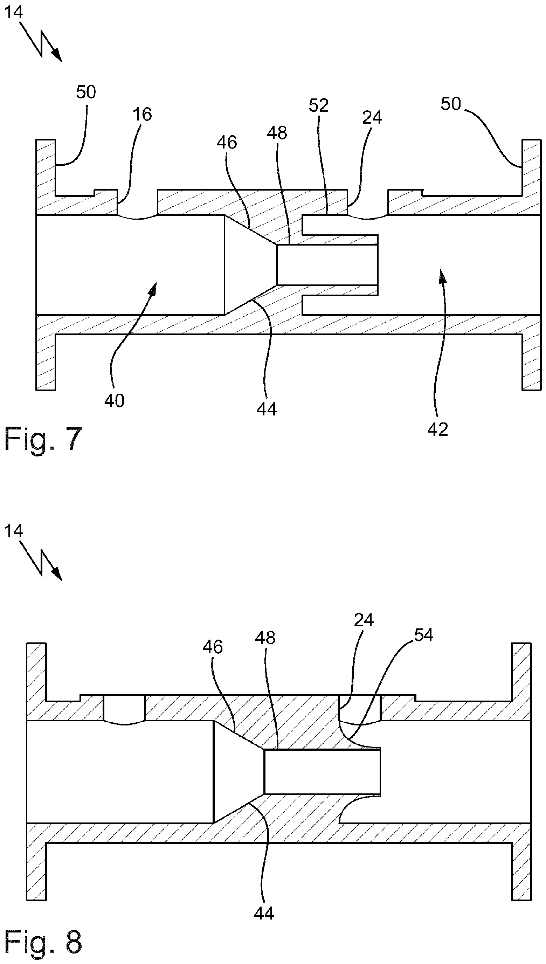

In Figur 7 ist das erfindungsgemäße Leitungsstück 14 allein und vergrößert dargestellt. Zwischen einer Einlasskammer 40, die mit der ersten Anschlussöffnung 16 in Verbindung steht, und einer Auslasskammer 42, die mit der zweiten Anschlussöffnung 24 steht, ist ein Strömungswiderstand 44 angeordnet. Die Anschlussöffnungen 16, 24 sind radial zum Leitungsstück 14 ausgerichtet.

Der Strömungswiderstand 44 ist als Venturi-Düse ausgebildet und weist einen ersten Düsenabschnitt 46 mit Querschnittsverengung sowie einen daran anschließenden zweiten Düsenabschnitt 48 mit kleinerem, konstantem Querschnitt auf. Die Düsenabschnitte 46, 48 sind koaxial im Leitungsstück 14 angeordnet. Durch den Strömungswiderstand 44 wird eine Druckdifferenz zwischen der ersten Anschlussöffnung 16 und der zweiten Anschlussöffnung 24 erzeugt. Aufgrund der Druckdifferenz strömt Fluid aus dem Leitungsstück 14 durch die erste Anschlussöffnung 16 in die Messeinheit 12.

Der Strömungswiderstand 44 kann dabei auch in anderer Weise ausgebildet sein. Beispielsweise kann der Strömungswiderstand 44 als Fortsatz, der in das Leitungsstück 14 hineinragt, ausgebildet sein. Es versteht sich, dass auch weitere Möglichkeiten zur Erzeugung einer Druckdifferenz denkbar sind. Zum Beispiel kann eine Biegung im Leitungsstück vorgesehen werden.

Das Leitungsstück 14 hat hier beispielhaft einen runden Querschnitt. Das Leitungsstück 14 hat an seinen Enden Verbindungen 50 zum Anschluss an anschließende Fluidleitungen bzw. zum Einbau in eine Leitung. Die Verbindungen 50 sind im dargestellten Beispiel als Flanschverbindungen ausgebildet.

Der zweite Düsenabschnitt 48 mündet in die Auslasskammer 42, die einen Umgebungsabschnitt 52 umfasst, der den zweiten Düsenabschnitt 48 radial umgibt. Das durch die zweite Anschlussöffnung 24 einströmende Fluid wird in diesem Umgebungsabschnitt 52 wieder mit dem Hauptfluss zusammengeführt.

Figur 8 zeigt das Leitungsstück 14 allein in einer alternativen Ausführungsform. Im Bereich der zweiten Anschlussöffnung 24 ist in der Auslasskammer 42 im Bereich der zweiten Anschlussöffnung 24 eine stetig gekrümmte radiale Wandung 54 vorgesehen. Der Wand ist abgerundet ausgebildet, sodass der Nebenfluss aus der Messeinheit in Richtung des Gesamtflusses gelenkt wird. Verwirbelungen oder ein Rückstau werden vermieden. Die stetig gekrümmte radiale Wandung 54 bewirkt somit eine Konditionierung der Strömung. Ein Totwasserbereich wird vermieden und der Fluss in dem Messkanal sowie in dem Leitungsstück 14 wird weiter optimiert.

Bezugszeichen

| | |
|---|---|
| 10 | Durchflussmengenmesser |
| 12 | Messeinheit |
| 14 | Leitungsstück |
| 16 | erste Anschlussöffnung |
| 18 | Einlass |
| 20 | Messkanal |
| 22 | Auslass |
| 24 | zweite Anschlussöffnung |
| 26 | erster Ultraschallwandler |
| 28 | zweiter Ultraschallwandler |
| 30 | erster Anschlussabschnitt |
| 32 | zweiter Anschlussabschnitt |
| 34 | erster Konditionierungsabschnitt |
| 36 | zweiter Konditionierungsabschnitt |
| 38 | Innenwand |
| 40 | Einlasskammer |
| 42 | Auslasskammer |
| 44 | Strömungswiderstand |
| 46 | erster Düsenabschnitt |
| 48 | zweiter Düsenabschnitt |
| 50 | Verbindung |
| 52 | Umgebungsabschnitt |
| 54 | stetig gekrümmte radiale Wandung |
| $\Delta p$ | Druckdifferenz |
| $Q_G$ | Gesamtfluss |
| $Q_N$ | Nebenfluss |
| $Q_H$ | Hauptfluss |

**Patentansprüche**

1. Messeinheit (12) zum Bestimmen eines Gesamtflusses ($Q_G$) eines Fluids, das durch ein Leitungsstück (14) strömt, mit:

   einem Einlass (18), einem Auslass (22) und einem dazwischen verlaufenden Messkanal (20); und
   einem ersten Ultraschallwandler (26) zum Aussenden eines Ultraschallsignals in den Messkanal und einem zweiten Ultraschallwandler (28), zum Empfangen des Ultraschallsignals nach Durchlaufen des Messkanals, **gekennzeichnet dadurch, dass**
   der Einlass und der Auslass zum lösbaren Anschließen an das Leitungsstück derart ausgebildet sind, dass der Gesamtfluss aufgeteilt wird in einen Hauptfluss ($Q_H$) im Leitungsstück und einen Nebenfluss ($Q_N$), der durch den Messkanal geleitet wird und anschließend wieder mit dem Hauptfluss vereinigt wird;
   die Messeinheit zum Ankoppeln an das Leitungsstück von außen an eine Außenwand des Leitungsstücks ausgebildet ist;
   der Einlass einen ersten Anschlussabschnitt (30) umfasst, der senkrecht zum Messkanal (20) verläuft;

der Auslass einen zweiten Anschlussabschnitt (32) umfasst, der senkrecht zum Messkanal verläuft; und
die Anschlussabschnitte dazu ausgebildet sind, zum Herstellen des lösbaren Anschlusses an das Leitungsstück
in entsprechende Aufnahmen am Leitungsstück einzugreifen.

2. Messeinheit (12) nach Anspruch 1, **gekennzeichnet dadurch, dass** die Ultraschallwandler (26, 28) einander gegenüberliegen und der Messkanal (20) zwischen den Ultraschallwandlern angeordnet ist, sodass das Ultraschallsignal den Messkanal parallel zur Strömungsrichtung des Fluids durchläuft.

3. Messeinheit (12) nach einem der vorstehenden Ansprüche, **gekennzeichnet dadurch, dass** der Messkanal (20) einen konstanten Querschnitt hat.

4. Messeinheit (12) nach einem der vorstehenden Ansprüche, **gekennzeichnet dadurch, dass**

   der Einlass (18) an der Verbindung zum Messkanal (20) zur Strömungskonditionierung einen ersten Konditionierungsabschnitt (34) mit einer Querschnittsverengung in Strömungsrichtung des Fluids umfasst; und/oder
   der Auslass (22) an der Verbindung zum Messkanal (20) zur Strömungskonditionierung einen zweiten Konditionierungsabschnitt (36) mit einer Querschnittserweiterung in Strömungsrichtung des Fluids umfasst.

5. Messeinheit (12) nach einem der vorstehenden Ansprüche, **gekennzeichnet dadurch, dass** der Messkanal (20) parallel zum Leitungsstück (14) verläuft, wenn die Messeinheit an das Leitungsstück angeschlossen ist.

6. Messeinheit (12) nach einem der vorstehenden Ansprüche, **gekennzeichnet dadurch, dass** eine Innenwand (38) des Messkanals (20) aus Kunststoff besteht.

7. Leitungsstück (14) zum Bestimmen eines Gesamtflusses ($Q_G$) eines Fluids, mit:

   am Anfang und am Ende angeordneten Verbindungen (50) zum Anschluss an anschließende Fluidleitungen;
   einer ersten Anschlussöffnung (16) und einer mit Abstand stromabwärts angeordneten zweiten Anschlussöffnung (24) zum lösbaren Anschließen
   einer Messeinheit (12) nach einem der Ansprüche 1 bis 6 von außen an eine Außenwand des Leitungsstücks; und
   einem Strömungswiderstand (44) zum Erzeugen eines Druckabfalls zwischen der ersten Anschlussöffnung und der zweiten Anschlussöffnung,
   wobei die erste Anschlussöffnung zum Verbinden mit dem Einlass (18) der Messeinheit und die zweite Anschlussöffnung zum Verbinden mit dem Auslass (22) der Messeinheit ausgebildet sind.

8. Leitungsstück (14) nach Anspruch 7, **gekennzeichnet dadurch, dass** der Strömungswiderstand (44) als Düse ausgebildet ist, die einen ersten Düsenabschnitt (46) mit einer Querschnittsverengung in Strömungsrichtung des Hauptflusses ($Q_H$) und einen anschließenden zweiten Düsenabschnitt (48) mit kleinerem, konstantem Querschnitt aufweist.

9. Leitungsstück (14) nach Anspruch 8, **gekennzeichnet durch**

   eine Einlasskammer (40), die in Strömungsrichtung des Hauptflusses vor der Düse angeordnet ist und an der die erste Anschlussöffnung (16) angeordnet ist; und
   eine Auslasskammer (42), die in Strömungsrichtung des Hauptflusses hinter der Düse angeordnet ist und an der die zweite Anschlussöffnung (24) angeordnet ist.

10. Leitungsstück (14) nach Anspruch 9, **gekennzeichnet dadurch, dass** der zweite Düsenabschnitt (48) in die Auslasskammer mündet und die Auslasskammer einen Umgebungsabschnitt (52) umfasst, der den zweiten Düsenabschnitt koaxial umgibt, wobei die zweite Anschlussöffnung im Bereich des zweiten Düsenabschnitts angeordnet ist.

11. Leitungsstück (14) nach Anspruch 10, **gekennzeichnet dadurch, dass** die Anschlusskammer im Bereich der zweiten Anschlussöffnung eine stetig gekrümmte radiale Wandung (54) umfasst.

12. Durchflussmesser (10) zum Bestimmen eines Gesamtflusses ($Q_G$) eines Fluids, mit einer Messeinheit (12) nach einem der Ansprüche 1 bis 6 und einem Leitungsstück (14) nach einem der Ansprüche 7 bis 11, an das die Messeinheit angeschlossen ist.

**13.** Durchflussmesser (10) nach Anspruch 12, mit einem Prozessor, der dazu ausgebildet ist,

basierend auf dem empfangenen Ultraschallsignal den Nebenfluss ($Q_N$) zu ermitteln; und
durch eine Multiplikation des Nebenflusses mit einem Proportionalitätsfaktor (K) den Gesamtfluss ($Q_G$) zu berechnen, wobei der Proportionalitätsfaktor ein Verhältnis des Nebenflusses zum Hauptfluss ($Q_H$) angibt.

**14.** Verfahren zum Bestimmen eines Gesamtflusses ($Q_G$) eines Fluids, das durch ein Leitungsstück (14) strömt, mit den Schritten:

Anschließen einer Messeinheit (12) nach einem der Ansprüche 1 bis 6 an
ein Leitungsstück nach einem der Ansprüche 7 bis 11 von außen an eine Außenwand des Leitungsstücks, sodass der Gesamtfluss aufgeteilt wird in einen Hauptfluss ($Q_H$) im Leitungsstück und einen Nebenfluss ($Q_N$), der durch den Messkanal geleitet wird und anschließend wieder mit dem Hauptfluss vereinigt wird;
Senden eines Ultraschallsignals in den Messkanal (20) und Empfangen des ausgesandten Ultraschallsignals nach Durchlaufen des Messkanals;
Ermitteln des Nebenflusses basierend auf dem empfangenen Ultraschallsignal; und
Berechnen des Gesamtflusses durch eine Multiplikation des Nebenflusses mit einem Proportionalitätsfaktor (K), der ein Verhältnis des Nebenflusses zum Hauptfluss angibt.

**15.** Verfahren nach Anspruch 14, mit einem Schritt des Eichens der Messeinheit (12), umfassend:

Trennen der Messeinheit von dem Leitungsstück (14);
Eichen der Messeinheit allein; und
Anschließen der geeichten Messeinheit an das Leitungsstück.

**Claims**

**1.** Measuring unit (12) for determining a total flow ($Q_G$) of a fluid flowing through a conductor element (14), comprising:

an inlet (18), an outlet (22) and an interjacent measuring channel (20); and
a first ultrasonic transducer (26) for emitting an ultrasonic signal into the measuring channel and a second ultrasonic transducer (28) for receiving the ultrasonic signal after it has passed through the measuring channel, **characterized in that**
the inlet and the outlet are designed for detachable connection to the conductor element in such a manner that the total flow is divided into a main flow ($Q_H$) in the conductor element and a bypass flow ($Q_N$), which is led through the measuring channel and then re-united with the main flow;
the measuring unit is designed for coupling to the conductor element from the outside on an outer wall of the conductor element;
the inlet comprises a first connecting section (30), which is perpendicular to the measuring channel (20);
the outlet comprises a second connecting section (32), which is perpendicular to the measuring channel; and
the connecting sections are designed to engage in corresponding receptacles on the conductor element in order to provide for the detachable connection to the conductor element.

**2.** Measuring unit (12) according to claim 1, **characterized in that** the ultrasonic transducers (26, 28) are located opposite one another and the measuring channel (20) is arranged between the ultrasonic transducers so that the ultrasonic signal passes through the measuring channel parallel to the flow direction of the fluid.

**3.** Measuring unit (12) according to one of the preceding claims, **characterized in that** the measuring channel (20) has a constant cross-section.

**4.** Measuring unit (12) according to one of the preceding claims, **characterized in that**

the inlet (18) at the connection to the measuring channel (20) for flow conditioning comprises a first conditioning section (34) with a cross-sectional constriction in the flow direction of the fluid; and/or
the outlet (22) at the connection to the measuring channel (20) for flow conditioning comprises a second conditioning section (36) with a widened cross-section in the flow direction of the fluid.

**5.** Measuring unit (12) according to one of the preceding claims, **characterized in that** the measuring channel (20) runs parallel to the conductor element (14) when the measuring unit is connected to the conductor element.

**6.** Measuring unit (12) according to one of the preceding claims, **characterized in that** an inner wall (38) of the measuring channel (20) is made of plastic.

**7.** Conductor element (14) for determining a total flow ($Q_G$) of a fluid, with:

connections (50) arranged at the beginning and at the end for connection to adjoining fluid conduits;
a first connection opening (16) and a second connection opening (24) arranged at a distance downstream for detachably connecting a measuring unit (12) according to one of claims 1 to 6 from the outside to an outer wall of the conductor element; and
a flow resistance (44) for generating a pressure drop between the first connection opening and the second connection opening,
wherein the first connection opening is designed for connection to the inlet (18) of the measuring unit and the second connection opening is designed for connection to the outlet (22) of the measuring unit.

**8.** Conductor element (14) according to claim 7, **characterized in that** the flow resistance (44) is designed as a nozzle which has a first nozzle section (46) with a cross-sectional constriction in the flow direction of the main flow ($Q_H$) and an adjoining second nozzle section (48) with a smaller, constant cross-section.

**9.** Conductor element (14) according to claim 8, **characterized by**

an inlet chamber (40) which is arranged upstream of the nozzle in the direction of flow of the main flow and at which the first connection opening (16) is arranged; and
an outlet chamber (42), which is arranged downstream of the nozzle in the flow direction of the main flow and at which the second connection opening (24) is arranged.

**10.** Conductor element (14) according to claim 9, **characterized in that** the second nozzle section (48) opens into the outlet chamber and the outlet chamber comprises a surrounding section (52) which coaxially surrounds the second nozzle section, the second connection opening being arranged in the area of the second nozzle section.

**11.** Conductor element (14) according to claim 10, **characterized in that** the connection chamber comprises a continuously curved radial wall (54) in the region of the second connection opening.

**12.** Flow meter (10) for determining a total flow ($Q_G$) of a fluid, with a measuring unit (12) according to one of claims 1 to 6 and a conductor element (14) according to one of claims 7 to 11, to which the measuring unit is connected.

**13.** Flow meter (10) according to claim 12, with a processor designed for determining the bypass flow ($Q_N$) based on the received ultrasonic signal; and
calculating the total flow ($Q_G$) by multiplying the bypass flow by a proportionality factor (K), whereby the proportionality factor indicates a ratio of the bypass flow to the main flow ($Q_H$).

**14.** Method for determining a total flow ($Q_G$) of a fluid flowing through a conductor element (14), comprising the steps of:

connecting a measuring unit (12) according to one of claims 1 to 6 to a conductor element according to one of claims 7 to 11 from the outside to an outer wall of the conductor element, so that the total flow is divided into a main flow ($Q_H$) in the conductor element and a bypass flow ($Q_N$), which is passed through the measuring channel and then re-united with the main flow;
transmitting an ultrasonic signal into the measuring channel (20) and receiving the transmitted ultrasonic signal after passing through the measuring channel;
determining the bypass flow based on the received ultrasonic signal; and calculating the total flow by multiplying the bypass flow by a proportionality factor (K), which indicates the ratio of the bypass flow to the main flow.

**15.** Method according to claim 14, with a step of calibrating the measuring unit (12) comprising:

disconnecting the measuring unit from the conductor element (14);
calibrating the measuring unit alone; and

connecting the calibrated measuring unit to the conductor element.

**Revendications**

1. Unité de mesure (12) pour déterminer un débit total ($Q_G$) d'un fluide s'écoulant à travers un élément de conduite (14), comprenant

    une entrée (18), une sortie (22) et un canal de mesure (20) s'étendant entre elles ; et
    un premier transducteur ultrasonore (26) pour émettre un signal ultrasonore dans le canal de mesure et un deuxième transducteur ultrasonore (28), pour recevoir le signal ultrasonore après avoir traversé le canal de mesure,
    **caractérisé en ce que**
    l'entrée et la sortie sont conçues pour être raccordées de manière amovible au élément de conduite de telle sorte que le débit total est divisé en un débit principal ($Q_H$) dans l'élément de conduite et un débit secondaire ($Q_N$) qui est dirigé à travers le canal de mesure et est ensuite réuni au débit principal ;
    l'unité de mesure est conçue pour être couplée au élément de conduite depuis l'extérieur sur une paroi extérieure du élément de conduite ; l'entrée comprend une première section de raccordement (30) qui est perpendiculaire au canal de mesure (20) ;
    la sortie comprend une seconde section de raccordement (32) qui est perpendiculaire au canal de mesure ; et les sections de raccordement sont conçues pour s'engager dans des logements correspondants sur l'élément de conduite afin d'établir le raccordement détachable sur l'élément de conduite.

2. Unité de mesure (12) selon la revendication 1, **caractérisée en ce que** les transducteurs ultrasonores (26, 28) sont opposés l'un à l'autre et le canal de mesure (20) est disposé entre les transducteurs ultrasonores, de sorte que le signal ultrasonore traverse le canal de mesure parallèlement à la direction d'écoulement du fluide.

3. Unité de mesure (12) selon l'une des revendications précédentes, **caractérisée en ce que** le canal de mesure (20) a une section transversale constante.

4. Unité de mesure (12) selon l'une des revendications précédentes, **caractérisée en ce que**

    l'entrée (18) comprend, au niveau de la connexion avec le canal de mesure (20) pour le conditionnement de l'écoulement, une première section de conditionnement (34) avec un rétrécissement de la section transversale dans la direction d'écoulement du fluide ; et/ou
    la sortie (22) comprend, au niveau de la connexion avec le canal de mesure (20) pour le conditionnement de l'écoulement, une deuxième section de conditionnement (36) avec un élargissement de la section transversale dans la direction d'écoulement du fluide.

5. Unité de mesure (12) selon l'une des revendications précédentes, **caractérisée en ce que** le canal de mesure (20) se déroule parallèle au élément de conduite (14) lorsque l'unité de mesure est raccordée au élément de conduite.

6. Unité de mesure (12) selon l'une des revendications précédentes, **caractérisée en ce qu'**une paroi intérieure (38) du canal de mesure (20) est en matière plastique.

7. Élément de conduite (14) pour déterminer un débit total ($Q_G$) d'un fluide, comprenant :

    des raccords (50) disposés au début et à la fin pour le raccordement à des conduites de fluide adjacentes ;
    une première ouverture de raccordement (16) et une deuxième ouverture de raccordement (24) disposée à distance en aval pour le raccordement amovible d'une unité de mesure (12) selon l'une des revendications 1 à 6 depuis l'extérieur sur une paroi extérieure du élément de conduite ; et une résistance à l'écoulement (44) pour générer une chute de pression entre le premier orifice de raccordement et le deuxième orifice de raccordement,
    dans lequel le premier orifice de raccordement est conçue pour être connectée à l'entrée (18) de l'unité de mesure et le deuxième orifice de raccordement est conçue pour être connectée à la sortie (22) de l'unité de mesure.

8. Élément de conduite (14) selon la revendication 7, **caractérisée en ce que** la résistance à l'écoulement (44) est réalisée sous la forme d'une buse qui présente une première section de buse (46) avec un rétrécissement de la section transversale dans le sens d'écoulement du débit principal ($Q_H$) et une deuxième section de buse (48) consécutive avec une section transversale plus petite et constante.

9. Élément de conduite (14) selon la revendication 8, **caractérisée par**

   une chambre d'entrée (40) qui est située en amont de la buse dans le sens d'écoulement du débit principal et sur laquelle est situé le premier orifice de raccordement (16) ; et
   une chambre de sortie (42), qui est disposée en aval de la buse dans le sens d'écoulement du débit principal et sur laquelle est disposé le deuxième orifice de raccordement (24).

10. Élément de conduite (14) selon la revendication 9, **caractérisée en ce que** la deuxième section de buse (48) débouche dans la chambre de sortie et **en ce que** la chambre de sortie comprend une section d'environnement (52) qui entoure coaxialement la deuxième section de buse, le deuxième orifice de raccordement étant disposé dans la zone de la deuxième section de buse.

11. Élément de conduite (14) selon la revendication 10, **caractérisée en ce que** la chambre de raccordement comprend une paroi radiale (54) à courbure continue dans la zone de la deuxième ouverture de raccordement.

12. Débitmètre (10) pour déterminer un débit total ($Q_G$) d'un fluide, comprenant une unité de mesure (12) selon l'une des revendications 1 à 6 et un élément de conduite (14) selon l'une des revendications 7 à 11, auquel est raccordée l'unité de mesure.

13. Débitmètre (10) selon la revendication 12, avec un processeur conçu pour déterminer le débit secondaire ($Q_N$) sur la base du signal ultrasonore reçu; et
    calculer le débit total ($Q_G$) en multipliant le débit secondaire par un facteur de proportionnalité (K), le facteur de proportionnalité indiquant un rapport entre le débit secondaire et le débit principal ($Q_H$).

14. Procédé de détermination d'un débit total ($Q_G$) d'un fluide s'écoulant à travers un élément de conduite (14), comprenant les étapes suivants:

    raccordement d'une unité de mesure (12) selon l'une des revendications 1 à 6 à un élément de conduite selon l'une des revendications 7 à 11, depuis l'extérieur d'une paroi extérieure du élément de conduite, de sorte que le débit total est divisé en un débit principal ($Q_H$) dans l'élément de conduite et un débit secondaire ($Q_N$) qui est acheminé à travers le canal de mesure et est ensuite fusioné au débit principal ;
    l'émission d'un signal ultrasonore dans le canal de mesure (20) et la réception du signal ultrasonore émis après avoir traversé le canal de mesure ;
    déterminer le débit secondaire sur la base du signal ultrasonore reçu ; et
    calculer le débit total en multipliant le débit secondaire par un facteur de proportionnalité (K), qui indique un rapport entre le débit secondaire et le débit principal.

15. Procédé selon la revendication 14, comprenant une étape d'étalonnage de l'unité de mesure (12), comprenant :

    séparation de l'unité de mesure de l'élément de conduite (14) ;
    étalonnage de l'unité de mesure seule ; et
    raccordement de l'unité de mesure étalonnée à l'élément de conduite.

Fig. 1

Fig. 2

Gesamtfluss [m³/h]

Fig. 3

Gesamtfluss [m³/h]

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013012139 A1
- JP 3557735 B
- DE 102009045620 A1
- US 20160341584 A1
- US 4428231 A
- US 20080016957 A1
- CN 106092232 A